# EUROPEAN PATENT APPLICATION

(11) **EP 4 696 598 A1**
(43) Date of publication of application: **18.02.2026**
(21) Application number: 25196545.5
(22) Date of filing: 18.08.2025
(51) Int. Cl.: B62K 21/14, B62J 11/10

(54) **SHOCK-ABSORBING DEVICE FOR HANDLEBAR**

(30) Priority: 15.08.2024 TW 113208849 U
(71) Applicant: Hsin Lung Accessories Co., Ltd., Hsin-Chu Hsien Taiwan (TW)
(72) Inventor: Liao, Xue-Sen, Hsin-Chu Hsien (TW)
(74) Representative: Lang, Christian

(57) **Abstract**

In the present invention, the bicycle handlebar (11) is connected to a front fork tube (12) via a stem tube, and the stem tube includes a stem base (2) and a handlebar holder (3). The handlebar holder is provided with a pair of clamping ears (31) for pivotal connection to a pivoting portion (21) of the stem base via a pivoting assembly (4). The inventive shock-absorbing device comprises at least one extension member (5), at least one shock-absorbing member (6), and an adjustment member (7). The shock-absorbing member is mounted in an accommodation space (51) formed between a pressure-contact portion and the main body (33) of the handlebar holder. The adjustment member includes a threaded portion (71) and a rod body (72) integrally protruding from the threaded portion, wherein the threaded portion is threaded into a threaded hole (52), and the rod body is sleeved within the shock-absorbing member, thereby positioning the shock-absorbing member between the main body and the threaded portion. When the user rides the bicycle over uneven terrain and the front fork tube moves vertically due to vibration, the main body of the handlebar holder presses against the shock-absorbing member, thereby buffering and absorbing the vibration force. The adjustment member can be used to adjust the strain level of the shock-absorbing member to achieve different shock-absorbing effects.

## Description

### BACKGROUND OF THE INVENTION

### 1. Field of the Invention

The present invention generally relates to a handlebar shock-absorbing device that is adapted for use in a bicycle, and more particularly to a handlebar shock-absorbing device with shock-absorbing functionality that enhances riding comfort.

### 2. Description of Related Art

Bicycles are a commonly used means of transportation. Their power source comes from pedaling by human force and does not need electricity or gasoline, making them very environmentally friendly and suitable for serving as a general tool of transportation or a leisure sports equipment. Since riding bicycles has been promoted for its recreation and environmental benefits, more and more people are selecting it for transportation. In general, a bicycle handlebar is used to control the direction of travel, and the handle grip is connected to the front fork tube of the bicycle by a stem tube, so that the bicycle rider can control the rotation of the front fork tube by turning the bicycle handlebar, thereby changing the direction of travel of a bicycle.

However, a conventional bicycle stem tube has only the function of connecting the handlebar and the front fork tube. However, there is rarely a completely flat road. Therefore, when a user rides a bicycle and encounters rugged roads or climbs on a stone road where there are high or low slopes on the road surface, the bicycle will vibrate due to the unevenness of the ground. The vibration on the front wheel is easily transmitted to the handlebar via the front fork tube and the stem tube. In a less serious situation, such a vibration will affect the rider's comfort in gripping the handlebar. Long time of riding is likely to cause tingling discomfort of two hands. In a more serious situation, it will hamper the rider's handling of the bicycle and affect the safety of the bicycle as it travels.

### SUMMARY OF THE INVENTION

In view of this, the present invention provides a handlebar shock-absorbing device that is suitable for use in bicycles, and more particularly to a handlebar shock-absorbing device that is capable of damping shock impulses and improving riding comfort.

In the invention, the bicycle handlebar is connected to a front fork tube via a stem base and a handlebar holder. The handlebar holder is provided with a pair of clamping ears for pivotal connection to a pivoting portion of the stem base. The shock-absorbing device comprises: at least one extension member integrally formed with and extending from the pivoting portion toward the handlebar, wherein an accommodation space is formed between the extension member and a main body of the handlebar holder, and the extension member is formed with a threaded hole; at least one shock-absorbing member mounted within the accommodation space; and an adjustment member comprising a threaded portion and a rod body integrally protruding from the threaded portion, wherein the threaded portion is threaded into the threaded hole, and the rod body is sleeved within the shock-absorbing member, thereby positioning the shock-absorbing member between the main body and the threaded portion.

When the user rides the bicycle over an uneven road surface and vibration causes the front fork tube to move up and down, the main body of the handlebar holder presses against the shock-absorbing member to buffer and absorb the vibration force. This reduces the discomfort experienced by the user's hands due to the shaking of the bicycle, thereby enhancing riding comfort and safety. Furthermore, the strain level of the shock-absorbing member can be adjusted by varying the position at which the adjustment member is screwed into the threaded hole, allowing for different shock absorption effects.

According to the above technical features, the rod body has a smaller outer diameter than that of the threaded portion, such that the threaded portion forms a relatively large shoulder adjacent to the rod body, and the shock-absorbing member abuts against the shoulder.

According to the above technical features, the shock-absorbing member is in form of a spring.

According to the above technical features, at least one buffer pad is provided between the stem base and the main body.

According to the above technical features, the buffer pad is mounted and positioned on the stem base; alternatively, the buffer pad is mounted and positioned on the main body.

According to the above technical features, the extension member comprises a neck portion extending from the pivoting portion, and an enlarged portion connected to the other end of the neck portion, and the enlarged portion has a greater surface area than that of the neck portion, and the threaded hole is located on the enlarged portion.

According to the above technical features, the main body of the handlebar holder is formed with a slot, and the slot has a shape conforming to that of the extension member.

According to the above technical features, a gap is defined between the slot and an outer periphery of the extension member.

According to the above technical features, the pivoting assembly comprises a first fastener and a second fastener that can be fixed together, and two washers, and the first and second fasteners are formed at outer end portions thereof with a cover plate for abutting against the pair of clamping ears, so that the handlebar is connected to the front fork tube by joining the first and second fasteners together.

According to the above technical features, the main body of the handlebar holder is formed, relative to the accommodation space, with at least one positioning portion configured to position the shock-absorbing member.

According to the above technical features, the positioning portion is configured in form of a structure protruding from the main body, which can be inserted into and positioned within the shock-absorbing member; alternatively, the positioning portion is configured in form of a structure recessed into the main body, allowing the shock-absorbing member to be accommodated and positioned therein.

### BRIEF DESCRIPTION OF THE DRAWINGS

Fig.1 is a perspective structural diagram of the shock-absorbing device according to the first embodiment of the invention.
Fig.2 is an exploded structural diagram of the shock-absorbing device according to the first embodiment of the invention.
Fig.3 is a schematic structural view of the shock-absorbing device according to the first embodiment of the invention.
Fig.4 is a schematic structural view of the shock-absorbing device according to the second embodiment of the invention.
Fig.5 is a schematic structural view of the shock-absorbing device according to the third embodiment of the invention.

### DETAILED DESCRIPTION OF THE INVENTION

In order to facilitate the examiner's understanding of the technical features, content and advantages of the invention and the efficacies it can achieve, the invention will be described in detail as follows in the form of embodiments and with reference to the accompanying drawings. The drawings used herein are merely for the purpose of illustration and supplement for the invention, and may not be the true proportions and precise configurations after the invention is implemented. Therefore, relationships between the proportions and configurations of the attached drawings should not be used to interpret or limit the scope of claims in the actual implementation.

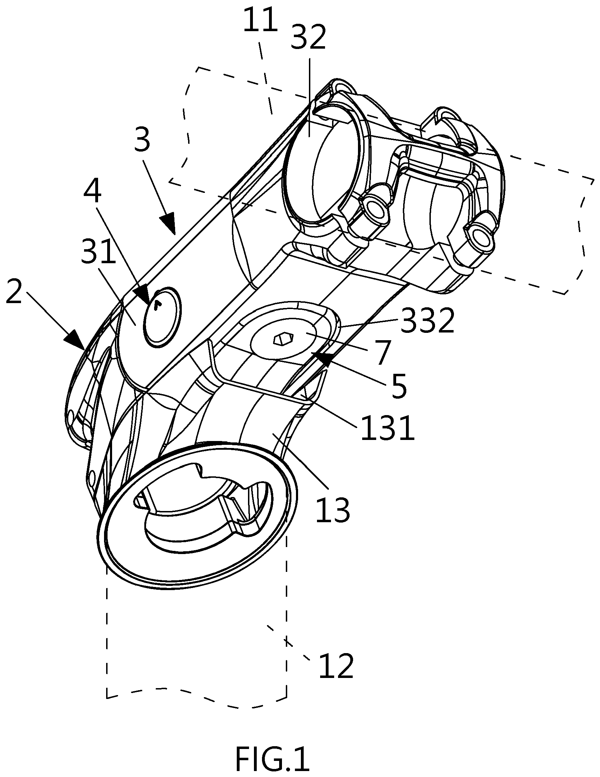

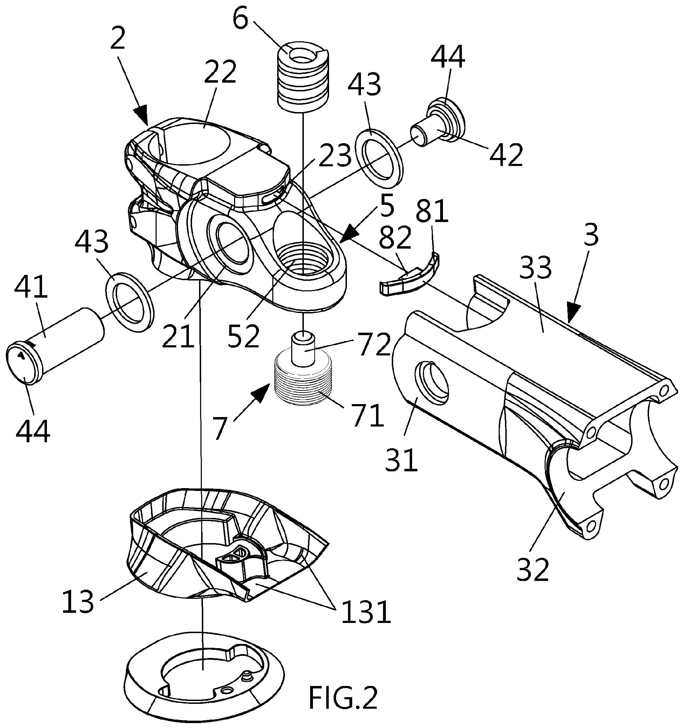

Fig.1 is a perspective structural diagram of the shock-absorbing device for a handlebar according to the invention, and Fig.2 is an exploded structural diagram of the shock-absorbing device for a handlebar according to the invention. First, in the present invention, the bicycle handlebar 11 is connected to a front fork tube 12 via a stem tube, and the stem tube includes a stem base 2 and a handlebar holder 3. The front fork tube 12 is connected at its lower end to the front wheel of the bicycle (not shown). The stem base 2 integrally includes a pivoting portion 21, and a sleeve portion 22 adapted to be sleeved onto the top end of the front fork tube 12. The handlebar holder 3 integrally includes a pair of clamping ears 31, and a coupling portion 32 adapted to hold the bicycle handlebar 11. The pair of clamping ears 31 are pivotally connected to the pivoting portion 21 via a pivoting assembly 4, thereby forming a connection between the handlebar 11 and the front fork tube 12. Further, a cable positioning structure 13 is provided between the stem base 2 and the front fork tube 12. The cable positioning structure 13 is assembled at the bottom of the stem base 2 and includes a wire entry port 131 that communicates between the inside and outside and is positioned below the handlebar holder 3. This allows the user to conveniently and easily route cables through the underside of the handlebar holder 3 and into the cable positioning structure 13 via the wire entry port 131. As a result, a major portion of the cables is not exposed outside the bicycle frame, which not only prevents cable clutter and issues such as friction or damage to the cables, but also enhances the overall aesthetic appearance of the bicycle.

The shock-absorbing device according to the invention comprises at least one extension member 5, at least one shock-absorbing member 6, and an adjustment member 7.

The extension member 5 is integrally formed with and extends from the pivoting portion 21 of the stem base toward the handlebar 11. An accommodation space 51 is formed between the extension member 5 and the main body 33 of the handlebar holder 3. The extension member 5 is formed with a threaded hole 52. A shock-absorbing member 6 is mounted within the accommodation space 51 and may be configured in form of a spring. The main body 33 of the handlebar holder is formed with a slot 331, and the slot 331 has a shape conforming to that of the extension member 5.

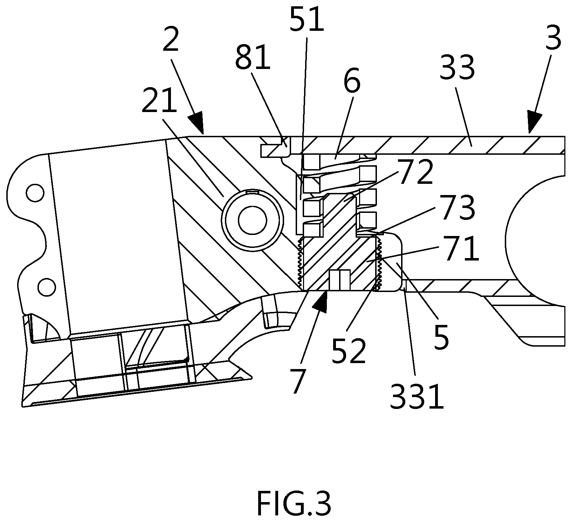

Referring together to Fig. 3, the adjustment member 7 includes a threaded portion 71 and a rod body 72 integrally protruding from the threaded portion 71. The outer diameter of the rod body 72 is smaller than that of the threaded portion 71, such that the threaded portion 71 forms a relatively large shoulder 73 adjacent to the rod body 72.

During the assembly process, the stem base 2 and the handlebar holder 3 are assembled together in an up-down abutting manner, with the extension member 5 being inserted into the slot 331. A gap 332 is present between the outer periphery of the extension member 5 and the slot 331. The adjustment member 7 is used to position the shock-absorbing member 6 within the accommodation space 51. Specifically, the threaded portion 71 is threaded into the threaded hole 52, and the rod body 72 is sleeved within the shock-absorbing member 6, thereby positioning the shock-absorbing member 6 between the main body 33 and the threaded portion 71. The shock-absorbing member 6 abuts at its upper end against the underside of the main body 33, while its lower end abuts against the top of the shoulder 73. The overall number of assembled components is greatly reduced, and the assembly process is simple.

When the user rides the bicycle over an uneven road surface, causing the bicycle to shake, the front fork tube 12 which is sleeved within the sleeve portion 22 of the stem base 2 will move up and down. At this time, as the handlebar holder 3 shakes, the main body 33 of the handlebar holder presses against the shock-absorbing member 6. The shock-absorbing member 6 absorbs the vertical vibration of the front fork tube 12, thereby reducing the degree of shaking of the handlebar holder 3. As a result, the handlebar 11 sleeved within the handlebar holder 3 will not vibrate or will only vibrate slightly, effectively reducing the discomfort caused by frame vibrations. The user can also use a hand tool to adjust the relative position of the adjustment member 7 within the threaded hole 52, thereby adjusting the degree to which the shock-absorbing member 6 is compressed by the shoulder 73. This allows for adjustment of the strain level of the shock-absorbing member 6, to achieve different shock-absorbing effects.

Furthermore, at least one buffer pad 81 may be provided between the stem base 2 and the main body 33. In the embodiment shown in the figures, the buffer pad 81 is mounted and positioned at a location on the stem base 2 above the extension member 5. The stem base 2 has a recessed portion 23 on its side wall relative to the main body 33, and the buffer pad 81 has a protruding portion 82 adapted to be inserted and positioned within the recessed portion 23. By inserting the protruding portion 82 into the recessed portion 23, the buffer pad 81 is securely mounted and positioned on the stem base 2, thereby isolating the stem base 2 from the main body 33. The buffer pad 81 serves to reduce the impact noise and collision sensation when the handlebar holder 3 rebounds, which can significantly improve the riding experience. Alternatively, the buffer pad may be mounted and positioned on the main body.

Additionally, the pivoting assembly 4 comprises a first fastener 41 and a second fastener 42 that can be fixed together, as well as two washers 43. The first and second fasteners 41, 42 are formed at outer end portions thereof with a cover plate 44 for abutting against the pair of clamping ears 31. By joining the first and second fasteners 41, 42 together, a connection between the handlebar 11 and the front fork tube 12 is established. Preferably, the two washers 43 are made of metal, as the metallic washers 43 help reduce wear caused by the tightening of the pivoting assembly.

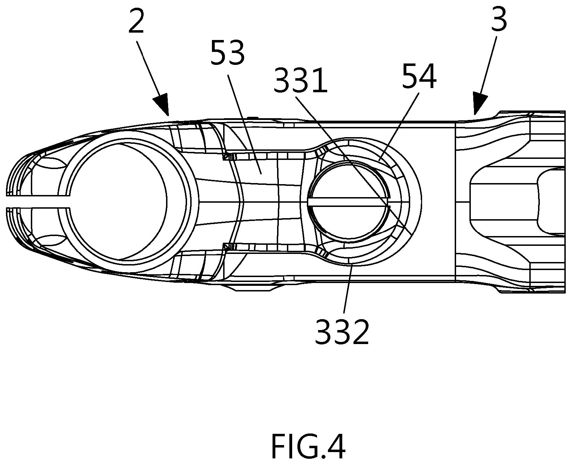

Referring to the second embodiment shown in Fig. 4, the extension member 5 comprises a neck portion 53 extending from the pivoting portion 21, and an enlarged portion 54 connected to the other end of the neck portion 53. The enlarged portion 54 has a greater surface area than that of the neck portion 53, and the threaded hole 52 is located on the enlarged portion 54. When the stem base 2 and the handlebar holder 3 are assembled together in an up-down abutting manner, the neck portion 53 and the enlarged portion 54 not only facilitates the insertion of the extension member 5 into the slot 331, but also enables quick alignment without displacement between the two components, thereby enhancing the ease of assembly.

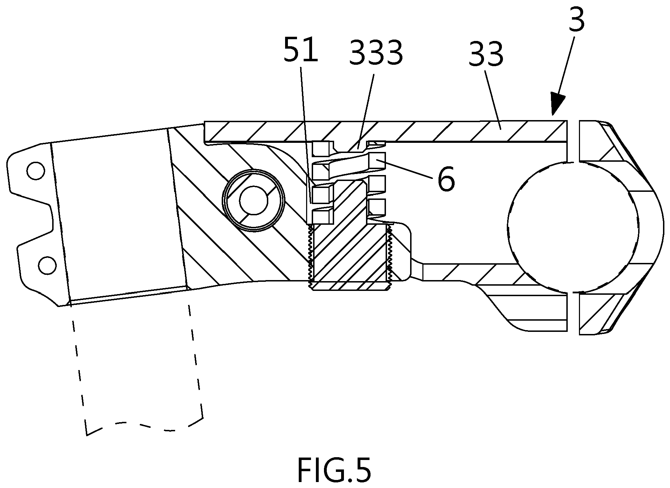

Additionally, as shown in Fig. 5, the main body 33 of the handlebar holder 3 is formed with at least one positioning portion 333 relative to the accommodation space 51, which serves to position the shock-absorbing member 6. In the embodiment shown, the positioning portion 333 may be configured in form of a structure protruding from the main body, which can be inserted into and positioned within the shock-absorbing member 6. Alternatively, the positioning portion may be configured in form of a structure recessed into the main body, allowing the shock-absorbing member to be accommodated and positioned therein.

In summary, the invention provides an improved and feasible a shock-absorbing device for a handlebar. While the invention has been described with reference to the preferred embodiments above, it should be recognized that the preferred embodiments are given for the purpose of illustration only and are not intended to limit the scope of the invention and that various modifications and changes, which will be apparent to those skilled in the relevant art, may be made without departing from the spirit and scope of the invention.

## Claims

1. A shock-absorbing device for a handlebar, where the handlebar is connected to a front fork tube through a stem tube which comprises a stem base and a handlebar holder provided with a pair of clamping ears pivotally connected to a pivoting portion of the stem base via a pivoting assembly, the shock-absorbing device comprising:
at least one extension member integrally formed with and extending from the pivoting portion toward the handlebar, wherein an accommodation space is formed between the extension member and a main body of the handlebar holder, and the extension member is formed with a threaded hole;
at least one shock-absorbing member mounted within the accommodation space; and
an adjustment member comprising a threaded portion and a rod body integrally protruding from the threaded portion, wherein the threaded portion is threaded into the threaded hole, and the rod body is sleeved within the shock-absorbing member, thereby positioning the shock-absorbing member between the main body and the threaded portion.

2. The shock-absorbing device for a handlebar according to Claim 1, wherein the rod body has a smaller outer diameter than that of the threaded portion, such that the threaded portion forms a relatively large shoulder adjacent to the rod body, and the shock-absorbing member abuts against the shoulder.

3. The shock-absorbing device for a handlebar according to Claim 1, wherein the shock-absorbing member is in form of a spring.

4. The shock-absorbing device for a handlebar according to Claim 1, wherein at least one buffer pad is provided between the stem base and the main body.

5. The shock-absorbing device for a handlebar according to Claim 4, wherein the buffer pad is mounted and positioned on the stem base.

6. The shock-absorbing device for a handlebar according to Claim 4, wherein the buffer pad is mounted and positioned on the main body.

7. The shock-absorbing device for a handlebar according to any one of Claims 1-6, wherein the extension member comprises a neck portion extending from the pivoting portion, and an enlarged portion connected to the other end of the neck portion, and the enlarged portion has a greater surface area than that of the neck portion, and the threaded hole is located on the enlarged portion.

8. The shock-absorbing device for a handlebar according to Claim 7, wherein the main body of the handlebar holder is formed with a slot, and the slot has a shape conforming to that of the extension member.

9. The shock-absorbing device for a handlebar according to Claim 8, wherein a gap is defined between the slot and an outer periphery of the extension member.

10. The shock-absorbing device for a handlebar according to any one of Claims 1-6, wherein the pivoting assembly comprises a first fastener and a second fastener that can be fixed together, and two washers, and the first and second fasteners are formed at outer end portions thereof with a cover plate for abutting against the pair of clamping ears, so that the handlebar is connected to the front fork tube by joining the first and second fasteners together.

11. The shock-absorbing device for a handlebar according to any one of Claims 1-6, wherein the main body of the handlebar holder is formed, relative to the accommodation space, with at least one positioning portion configured to position the shock-absorbing member.

12. The shock-absorbing device for a handlebar according to Claim 11, wherein the positioning portion is configured in form of a structure protruding from the main body, which can be inserted into and positioned within the shock-absorbing member.

13. The shock-absorbing device for a handlebar according to Claims 11, wherein the positioning portion is configured in form of a structure recessed into the main body, allowing the shock-absorbing member to be accommodated and positioned therein.
